# FASCICULE DE BREVET EUROPEEN

(11) **EP 3 042 847 B1**
(45) Date de publication et mention de la délivrance du brevet: **29.03.2017**
(21) Numéro de dépôt: 15201085.6
(22) Date de dépôt: 18.12.2015
(51) Int. Cl.: B64C 13/42, F15B 9/12, F15B 9/10, F15B 18/00

(54) **SERVOCOMMANDE ET AERONEF MUNI D'UNE TELLE SERVOCOMMANDE**
SERVOSTEUERUNG UND LUFTFAHRZEUG, DAS MIT EINER SOLCHEN SERVOSTEUERUNG AUSGESTATTET IST
A SERVO-CONTROL AND AN AIRCRAFT HAVING SUCH A SERVO-CONTROL

(30) Priorité: 06.01.2015 FR 1500010
(43) Date de publication de la demande: 13.07.2016
(73) Titulaire: Airbus Helicopters, 13725 Marignane Cedex (FR)
(72) Inventeur: BIHEL, Jean-Romain, 13740 LE ROVE (FR); MARGER, Thibaut, 13180 GIGNAC LA NERTHE (FR); PUJOL, Christophe, 13127 VITROLLES (FR); PANTAINE, Alexandre, 13127 VITROLLES (FR)
(74) Mandataire: GPI & Associés

(56) Documents cités:
- GB-A- 627 737
- GB-A- 728 142
- GB-A- 777 273
- US-A- 2 597 420

## Description

La présente invention concerne une servocommande, et un aéronef muni d'une telle servocommande.

Classiquement, un aéronef comporte des organes de manoeuvre, tels que les pales d'un rotor de sustentation d'un giravion ou encore des gouvernes de direction d'un avion par exemple.

A l'aide de commandes de vol, le pilote contrôle donc les organes de manoeuvre de l'aéronef. Toutefois, les efforts à fournir sont parfois très importants pour déplacer ces organes de manoeuvre.

Par suite, la chaîne cinématique reliant une commande de vol à un organe de manoeuvre est parfois munie d'un système hydraulique d'assistance. Ce système hydraulique comprend une servocommande permettant au pilote de gouverner l'aéronef sans difficulté et avec précision.

Plus particulièrement, un giravion est muni d'un rotor principal assurant au moins partiellement la sustentation voire la propulsion du giravion. Pour diriger le giravion, un pilote peut notamment modifier le pas des pales du rotor principal.

Par suite, le giravion comporte un ensemble de plateaux pourvu d'un plateau inférieur non tournant et d'un plateau supérieur tournant. Cet ensemble est dénommé « ensemble de plateaux cycliques » par la suite. Par contre, cet ensemble de plateaux cycliques est parfois plus simplement dénommé « plateaux cycliques » par l'homme du métier. Le plateau inférieur non tournant est relié aux commandes de vol du pilote, généralement par au moins trois chaînes de commande distinctes, alors que le plateau supérieur tournant est relié à chaque pale respectivement par une bielle.

Le pilote commande parfois l'ensemble de plateaux cycliques via des commandes mécaniques. Toutefois, les efforts à exercer par le pilote pour manoeuvrer l'ensemble de plateaux cycliques sont très importants, en particulier si la masse du giravion est également importante.

Par conséquent, une servocommande est agencée entre une portion amont et une portion aval de chaque chaîne cinématique de commande pour assister un pilote. Le pilote sollicite alors les servocommandes sans effort particulier via la portion amont, puis ces servocommandes retranscrivent l'ordre du pilote et agissent sur la portion aval de la chaîne cinématique.

De même, un hélicoptère est pourvu d'un rotor arrière dont le pas des pales peut être ajusté via une servocommande pour contrôler les mouvements en lacet de l'appareil.

De façon usuelle, les servocommandes comportent un vérin muni d'au moins un corps externe et d'une tige de puissance. La tige de puissance comporte alors un piston de commande par corps. Chaque piston de commande évolue dans un volume interne d'un corps. Ainsi, chaque piston de commande délimite une chambre de rétraction et une chambre d'extension à l'intérieur de chaque corps.

L'expression « chambre de rétraction » désigne une chambre provoquant la rétraction de la servocommande lorsque ladite chambre est remplie par un fluide. A l'inverse, l'expression « chambre d'extension » désigne une chambre provoquant l'extension de la servocommande lorsque ladite chambre est remplie par un fluide.

Une servocommande est dénommée « servocommande à corps mobile » lorsque la tige de puissance est immobilisée en étant ancrée à une structure immobile de l'aéronef. Par exemple, la tige de puissance est ancrée à une boîte de transmission de puissance. Dès lors, chaque corps coulisse le long de la tige de puissance en fonction de la pression régnant dans les chambres de rétraction et d'extension.

A l'inverse, une servocommande est dénommée « servocommande à corps fixe » lorsque chaque corps de la servocommande est immobilisé. Dès lors, la tige de puissance effectue un mouvement en translation par rapport à chaque corps en fonction de la pression régnant dans les chambres de rétraction et d'extension.

De plus, chaque corps comporte un distributeur hydraulique pour alimenter en fluide la chambre de rétraction ou la chambre d'extension de ce corps suivant l'ordre reçu.

L'ordre de pilotage d'un pilote est donc transmis au distributeur hydraulique, ce distributeur hydraulique alimentant en fluide les chambres hydrauliques appropriées. En fonction des ordres donnés, le distributeur hydraulique alimente donc en fluide hydraulique chaque chambre de rétraction ou chaque chambre d'extension, et induit par suite la rétraction ou l'extension de la servocommande.

Sur un aéronef, des servocommandes à au moins deux corps sont couramment utilisées pour manoeuvrer les pales d'un rotor principal, notamment par sécurité. Ainsi, si un corps devient inopérant suite à une fuite hydraulique accidentelle, la servocommande demeure fonctionnelle.

Chaque corps est usuellement dimensionné pour pouvoir déplacer un organe de manoeuvre même en cas de dysfonctionnement de l'autre corps.

Par ailleurs, la manoeuvre des pales d'un rotor arrière peut éventuellement être réalisée sans assistance hydraulique. Dès lors, une servocommande à simple corps peut être mise en oeuvre. En effet, une panne de la servocommande n'est alors pas catastrophique.

Ainsi, en cas de panne d'un système hydraulique, une servocommande à corps mobile peut se comporter comme une simple bielle. Chaque corps mobile de la servocommande peut alors être déplacé par le moyen de commande manoeuvré par un pilote, les efforts à fournir par le pilote étant néanmoins plus importants. Pour aider le pilote, un compensateur d'efforts peut alors être implémenté.

L'état de la technique comporte une servocommande à simple corps mobile muni d'un distributeur hydraulique comprenant un levier d'entrée. Ce levier d'entrée est relié mécaniquement à un moyen de commande manoeuvrable par un pilote.

De plus, le levier d'entrée est articulé directement à un tiroir de distribution qui est mobile à l'intérieur d'un boîtier du distributeur hydraulique. A l'inverse, le levier d'entrée est situé en dehors de ce boîtier. De plus, le levier d'entrée comporte uniquement un degré de liberté en rotation par rapport au boitier.

Le tiroir de distribution peut comporter un tiroir principal et un tiroir de secours prévu pour permettre le fonctionnement de la servocommande en cas de blocage du tiroir principal.

Par suite, un déplacement du moyen de commande sur ordre d'un pilote induit une rotation du levier d'entrée et finalement une translation du tiroir de distribution. La position du tiroir de distribution au sein du boîtier du distributeur hydraulique conditionne la pression du fluide hydraulique régnant dans les chambres de rétraction et d'extension de la servocommande.

En outre, la servocommande comporte un système de verrouillage pour permettre à une servocommande d'agir comme une bielle en cas de panne hydraulique.

Ce système de verrouillage inclut une butée mobile. Cette butée prend la forme d'un doigt de verrouillage qui est mobile entre une position étendue atteinte en l'absence de pression hydraulique dans le distributeur hydraulique et une position rétractée atteinte lorsque cette pression hydraulique dépasse un seuil de pression. Un ressort tend à pousser le doigt de verrouillage dans la position étendue.

Le doigt de verrouillage s'étend d'un pied saillant en dehors du boîtier du distributeur vers une tête qui coulisse dans un système d'intercommunication du distributeur hydraulique. Ce système d'intercommunication met en relation hydraulique la chambre de rétraction et la chambre d'extension d'un corps de la servocommande lorsque le doigt de verrouillage est dans la position étendue.

Lorsque la pression hydraulique dans la servocommande est supérieure au seuil de pression, le fluide hydraulique présent dans le système d'intercommunication exerce sur le doigt de verrouillage un effort supérieur à l'effort exercé par le ressort. Le doigt de verrouillage est alors dans la position rétractée et n'entrave pas le mouvement du levier d'entrée par rapport au distributeur hydraulique.

De plus, là tête du doigt de verrouillage obture un canal du système d'intercommunication pour séparer hydrauliquement la chambre de rétraction et la chambre extension d'un corps de la servocommande.

Lorsque la pression hydraulique devient inférieure au seuil de pression, le ressort déplace le doigt de verrouillage dans la position étendue. Le pied du doigt de verrouillage de la butée mobile entrave alors le mouvement du levier d'entrée par rapport au distributeur hydraulique en pénétrant dans un orifice d'accueil conique du levier d'entrée. De plus, la tête du doigt de verrouillage n'obture plus le canal du système d'intercommunication. Dès lors, la chambre de rétraction et la chambre extension communiquent hydrauliquement.

Par suite, la position du levier d'entrée est verrouillée dans une position neutre par rapport au boîtier du distributeur. Un déplacement du levier d'entrée induit donc un déplacement du distributeur hydraulique et du corps de la servocommande au travers notamment du doigt de verrouillage.

Le cheminement des efforts au travers de la servocommande induit toutefois des surcontraintes locales importantes au niveau du doigt de verrouillage.

De plus, lors des phases de transition entre la position étendue et la position rétractée du doigt de verrouillage, ce doigt de verrouillage frotte fortement contre une surface d'appui de l'orifice d'accueil du levier d'entrée, en raison du cheminement particulier des efforts au travers de cette surface d'appui. Ce frottement peut induire un endommagement rapide du doigt de verrouillage. De plus, des phénomènes d'à-coup sont parfois ressentis par le pilote lors de ces phases de transition notamment lorsque le doigt de verrouillage et son orifice de réception ne sont pas parfaitement en vis-à-vis.

En outre, le levier d'entrée étant situé totalement à l'extérieur du boîtier du distributeur, l'orifice d'accueil est susceptible d'être au moins partiellement obturé par des dépôts de matière indus.

Le document GB 728142 décrit un système de verrouillage.

Ce document GB 728142 présente un système muni d'un premier levier relié à des commandes de vol et d'un deuxième levier relié à un organe de manoeuvre. Le premier levier est articulé au deuxième levier ainsi qu'à un distributeur hydraulique et à une tige mobile d'une servocommande.

Dès lors, un système de verrouillage inclut un levier coudé pour solidariser le premier levier au deuxième levier

Le document GB 744476 décrit une servocommande munie d'un corps mobile. Dès lors, un piston délimite une chambre de rétraction et une chambre d'extension en liaison fluidique avec un distributeur hydraulique de la servocommande.

Ce distributeur hydraulique est pourvu d'un système de verrouillage muni d'un dispositif hydraulique d'antiretour.

Les documents GB 627737, US 2597420 et GB 777273 sont aussi connus.

La présente invention a alors pour objet de proposer une servocommande visant à réduire au moins certains des inconvénients précités rencontrés suite à l'utilisation d'un doigt de verrouillage mobile.

Selon l'invention, une servocommande est munie d'au moins un corps mobile et d'une tige de puissance immobile, cette tige de puissance comprenant un piston par corps, chaque piston délimitant une chambre dite « chambre de rétraction » et une chambre dite « chambre d'extension » dans un carter de ce corps.

Chaque corps comporte un distributeur hydraulique muni d'au moins une entrée hydraulique apte à être reliée à un système d'acheminement de fluide et d'au moins une sortie hydraulique apte à être reliée à un système d'échappement de fluide, chaque distributeur hydraulique d'un corps comprenant au moins un tiroir de distribution hydraulique mobile au sein du distributeur hydraulique pour mettre sur requête en communication fluidique chaque chambre de ce corps avec l'entrée hydraulique ou la sortie hydraulique.

Le distributeur hydraulique comprend un arbre de commande mobile en rotation autour d'un axe longitudinal, cet arbre de commande étant relié au tiroir de distribution de ce distributeur hydraulique pour qu'une rotation de l'arbre de commande induise un déplacement du tiroir de distribution.

Cette servocommande comporte un levier d'entrée situé en dehors de chaque corps, le levier d'entrée étant relié à l'arbre de commande et étant mobile selon un premier mouvement pour mettre en rotation cet arbre de commande, ledit levier d'entrée étant apte à être relié à une chaîne cinématique générant un ordre de déplacement de la servocommande, la servocommande comprenant un organe de butée fixe solidaire d'au moins un corps, l'organe de butée étant muni d'au moins une première surface de butée, le levier d'entrée comprenant une portion d'arrêt coopérant avec l'organe de butée, la servocommande comportant un moyen de mobilité pour déplacer selon un deuxième mouvement en translation longitudinale le levier d'entrée d'une première position à une deuxième position et inversement en fonction d'une condition prédéterminée, la première surface de butée limitant un débattement sans contrainte de ladite portion d'arrêt lors du premier mouvement à une première amplitude uniquement lorsque ledit levier d'entrée est dans la première position.

Le tiroir de distribution peut comprendre un unique tiroir, ou encore un tiroir principal associé à un tiroir de secours conformément à l'enseignement de certaines servocommandes connues.

Contrairement à certains enseignements, le levier d'entrée de la servocommande déplace donc indirectement le tiroir de distribution via un arbre de commande interposé entre le levier d'entrée et le tiroir de distribution. Ce levier d'entrée est articulé à une chaîne cinématique contrôlée par exemple par une commande manoeuvrable par un pilote.

Le levier d'entrée est en outre mobile en pouvant réaliser un premier mouvement. Ce premier mouvement peut prendre la forme d'une rotation ou d'une translation transversale pour induire une rotation de l'arbre de commande sur ordre d'une chaîne cinématique. De plus, le levier d'entrée est mobile selon un deuxième mouvement distinct du premier mouvement. Ce deuxième mouvement est un mouvement en translation longitudinale, à savoir selon une direction longitudinale.

Ce levier d'entrée comprend par ailleurs une portion d'arrêt qui évolue au sein d'un organe de butée solidaire d'un corps de la servocommande lorsque le levier d'entrée est dans la première position.

L'expression « portion d'arrêt » désigne une partie du levier d'entrée pouvant être en appui contre l'organe de butée.

L'organe de butée comporte en effet au moins une surface apte à contraindre le mouvement du levier d'entrée réalisé sur ordre d'une chaîne cinématique. Ainsi, l'organe de butée comporte au moins une surface dite « première surface de butée ».

L'expression « surface de butée » désigne alors une surface de l'organe de butée contre laquelle la portion d'arrêt du levier d'entrée peut être en appui.

En effet, en fonction de la position longitudinale du levier d'entrée, la portion d'arrêt est ou n'est pas en vis-à-vis de la première surface de butée. Lorsque la portion d'arrêt est en vis à vis de la première surface de butée, cette première surface de butée limite le déplacement sans contrainte selon le premier mouvement du levier d'entrée à une amplitude dite « première amplitude ».

L'expression « déplacement sans contrainte » signifie que le déplacement du levier d'entrée n'est pas contraint par l'organe de butée. Dès lors, tant que le levier d'entrée est déplacé dans les limites de la première amplitude, le levier d'entrée n'est pas contraint par l'organe de butée, le levier d'entrée n'entrant pas en contact avec l'organe de butée. L'expression « déplacement sans contrainte » désigne donc un déplacement du levier d'entrée n'engendrant pas un déplacement de l'organe de butée.

Sur une servocommande à simple corps, la première amplitude est minimisée. Par exemple, le levier d'entrée peut alors effectuer le premier mouvement selon deux sens opposés sur une première amplitude de plus ou moins un millimètre à partir d'une position neutre. Le terme « amplitude » désigne donc l'étendu du déplacement du levier d'entrée selon deux sens à partir d'une position neutre.

Cette première amplitude est suffisante pour centrer la portion d'arrêt au sein de la première surface de butée lors de la mise en pression hydraulique de la servocommande.

En effet, si levier d'entrée n'est pas centré, le tiroir de distribution met en relation une chambre du corps avec l'entrée hydraulique. Une chambre est alors alimentée hydrauliquement. La pression augmente dans la chambre alimentée ce qui conduit à une translation du corps mobile par rapport à la tige de puissance, mais aussi par rapport au levier d'entrée. Le corps est translate jusqu'à ce que le tiroir de distribution coupe l'alimentation hydraulique des chambres. Cette coupure intervient alors lorsque la portion d'arrêt est centrée dans la première surface de butée.

Dès lors, une translation longitudinale du levier d'entrée peut être réalisée pour éloigner la portion d'arrêt de la première surface de butée, par exemple pour augmenter l'amplitude du déplacement sans contrainte autorisé pour ce levier d'entrée.

Le levier d'entrée étant centré dans l'organe de butée, le déplacement du levier d'entrée s'effectue sans frottement sur l'organe de butée. Aucune pièce mécanique ne subit donc un frottement destructeur lors de la translation longitudinale du levier d'entrée de la première position à la deuxième position par exemple.

De plus, cette translation tend à s'effectuer sans à-coup.

Par ailleurs, en cas dysfonctionnement de la servocommande ou du système d'acheminement de fluide par exemple, le levier d'entrée est agencé dans la première position. Dès lors, un mouvement du levier d'entrée sur une amplitude supérieure à la première amplitude provoque l'appui du levier d'entrée contre l'organe de butée.

Le pilote ressent cet appui. Néanmoins, le pilote peut augmenter l'effort exercé sur un moyen de commande pour poursuivre le déplacement du levier d'entrée en déplaçant l'organe de butée. Ce déplacement du levier d'entrée est alors contraint par l'organe de butée. Toutefois, l'effort à exercer pour déplacer le corps peut être développé par un pilote.

Dès lors, lorsque le levier d'entrée atteint l'organe de butée, le levier d'entrée peut exercer un effort direct sur l'organe de butée, qui par solidarité, est transmis au corps de la servocommande. Le corps de la servocommande se comporte alors comme une bielle.

Ce cheminement d'effort tend à limiter les risques de création de surcontraintes mécaniques pénalisantes localement.

Par suite un déplacement de la chaîne cinématique provoque un déplacement du corps de la servocommande au travers successivement du levier d'entrée et de l'organe de butée. Ce corps se comporte comme une bielle dans cette configuration.

L'invention peut aussi s'appliquer à une servocommande à au moins deux corps.

Une telle servocommande comporte au moins deux corps, chaque corps étant alimenté hydrauliquement par son propre circuit hydraulique.

Dès lors, le levier d'entrée peut coopérer avec l'arbre de commande de chaque corps.

Lorsque tous les corps sont alimentés hydrauliquement de manière optimale, le levier d'entrée se trouve par exemple dans la première position. Le débattement sans contrainte du levier d'entrée est limité à une première amplitude.

Par contre, lorsqu'au moins un corps n'est plus alimenté hydrauliquement de manière adéquate suite à une panne par exemple, le levier d'entrée est déplacé dans la deuxième position pour augmenter le débattement sans contrainte de ce levier d'entrée afin d'améliorer les performances du corps en fonctionnement.

La servocommande peut de plus comporter une ou plusieurs des caractéristiques qui suivent

Ainsi, la portion d'arrêt peut comporter une articulation apte à être reliée à la chaîne cinématique commandant la servocommande.

Cette portion d'arrêt est favorablement articulée à la chaîne cinématique contrôlant la servocommande. Ainsi, en cas de rupture du levier d'entrée, l'articulation du levier d'entrée peut être déplacée au sein de l'organe de butée par la chaîne cinématique pour déplacer si besoin les corps de la servocommande au travers de l'organe de butée.

Par ailleurs, l'organe de butée peut comporter une deuxième surface de butée distincte de la première surface de butée, la deuxième surface de butée limitant l'amplitude de déplacement de ladite portion d'arrêt lors du premier mouvement à une deuxième amplitude lorsque le levier d'entrée est dans la deuxième position, la deuxième amplitude étant différente de la première amplitude.

Cette variante présente l'avantage d'ajuster la course maximale sans contrainte du levier d'entrée en fonction d'au moins un critère prédéterminé.

Ainsi, le levier d'entrée peut être dans la première position en dessous d'un seuil de pression, et dans la deuxième position au dessus du seuil de pression.

Sur une servocommande à simple corps, le débattement sans contrainte du levier d'entrée dans la première position est limité à la première amplitude pour permettre le centrage du levier d'entrée, et induire un appui du levier d'entrée contre l'organe de butée suite à une course faible en cas de panne hydraulique.

La deuxième amplitude peut alors être supérieure à la première amplitude pour optimiser les performances de la servocommande lorsque cette servocommande fonctionne correctement.

A l'inverse, sur une servocommande au moins à double corps, la deuxième amplitude peut être inférieure à la première amplitude. Le débattement sans contrainte du levier d'entrée dans la deuxième position est limité à la deuxième amplitude réduite pour ne pas obtenir une servocommande trop rapide. Par contre, en cas de panne hydraulique d'un corps, le débattement est augmenté à une première amplitude importante pour augmenter les performances des corps en fonctionnement.

Eventuellement, l'organe de butée peut comporter une surface de butée qui évolue longitudinalement à partir de la première surface de butée.

Par exemple, une surface de butée évolutive est agencée entre la première surface de butée et la deuxième surface de butée.

L'expression « surface de butée évolutive » désigne une surface qui limite le débattement sans contrainte de la portion d'arrêt à une amplitude qui évolue en fonction de la position longitudinale du levier d'entrée.

Ce dispositif permet d'avoir une évolution progressive du débattement sans contrainte autorisé pour le levier d'entrée.

Par ailleurs, la portion d'arrêt est éventuellement centrée au sein de la première surface de butée lorsque la servocommande est alimentée par un fluide hydraulique à une pression supérieure à un seuil de pression dit « seuil minimal », le tiroir de distribution isolant alors hydrauliquement les chambres de l'entrée hydraulique et de la sortie hydraulique.

A partir d'un seuil minimal de pression, le levier d'entrée est centré dans la première surface de butée. Le pilote est alors assisté en effort, la vitesse de déplacement du corps de la servocommande dépendant du débattement du levier d'entrée.

Selon une réalisation, le moyen de mobilité comporte un actionneur relié au levier d'entrée et un dispositif de commande apte à donner un ordre à l'actionneur pour déplacer en translation longitudinale le levier d'entrée en fonction de ladite valeur.

Un tel dispositif peut comporter par exemple un capteur de pression, un capteur mesurant la valeur d'un paramètre de surveillance prédéterminé, un organe manoeuvrable par un pilote tel qu'un bouton rotatif, ou encore un équipement tel qu'un système de pilotage automatique par exemple.

Selon une réalisation hydraulique, le moyen de mobilité comporte une cavité, ce moyen de mobilité déplaçant en translation longitudinale le levier d'entrée d'une première position à une deuxième position et inversement en fonction d'un seuil d'une pression régnant dans ladite cavité dit « seuil maximal ».

Le seuil maximal est supérieur au seuil minimal évoqué précédemment.

Par exemple, en dessous du seuil minimal la servocommande ne peut pas fournir une assistance hydraulique pour manoeuvrer un organe.

A partir du seuil minimal, la servocommande fournit une assistance hydraulique, le levier d'entrée étant alors dans la première position de manière à avoir un débattement sans contrainte limité à la première amplitude.

Enfin, à partir du seuil maximal, la servocommande fournit une assistance hydraulique. De plus, le levier d'entrée est alors dans la deuxième position de manière à avoir un débattement sans contrainte éventuellement limité à une deuxième amplitude.

Selon une première variante de ce mode de réalisation hydraulique, la servocommande comportant un circuit hydraulique alimentant une entrée hydraulique d'un corps, la cavité est ménagée dans ledit circuit hydraulique.

Un capteur de pression peut mesurer la pression dans le circuit hydraulique pour commander un actionneur par exemple.

Selon une deuxième variante de ce mode de réalisation hydraulique, la cavité est ménagée dans l'arbre de commande au sein du corps, cet arbre de commande étant solidaire en translation longitudinale avec le levier d'entrée, le moyen de mobilité comportant une liaison fluidique reliant la cavité à ladite entrée hydraulique.

Cette variante présente l'avantage de ne pas nécessiter l'utilisation d'un capteur et d'un actionneur. En effet, le fluide alimentant la servocommande permet de déplacer l'arbre de commande et le levier d'entrée conjointement.

Par ailleurs, le distributeur hydraulique peut comporter un organe élastique qui maintient l'arbre de commande dans la première position en dessous du seuil maximal de pression.

En outre, l'arbre de commande peut comporter une structure allongée s'étendant longitudinalement et un bras allongé solidaire de ladite structure allongée, ledit bras allongé s'étendant longitudinalement en parallèle à ladite structure allongée, la structure allongée étant reliée au levier d'entrée, le bras allongé coulissant dans un orifice dudit tiroir de distribution.

Dans cette configuration, l'arbre de commande peut être déplacé en translation par rapport au tiroir de distribution.

Par ailleurs, l'arbre de commande peut saillir partiellement du corps en comportant une partie non saillante agencée dans le corps et une partie saillante agencée en dehors du corps, la partie non saillante étant reliée mécaniquement au tiroir de distribution, la partie saillante étant reliée mécaniquement au levier d'entrée.

La servocommande comporte alors un joint dynamique entre la partie saillante et un carter du corps.

Dès lors, la liaison entre le tiroir de distribution et un levier articulé à ce tiroir de distribution s'effectue dans un environnement protégé au sein de la servocommande.

En outre, l'organe de butée peut comporter une chape munie d'une première joue et d'une deuxième joue, au moins une joue comportant au moins une première surface de butée arquée, un espace séparant lesdites joues étant apte à être traversé par une bielle de commande de ladite chaîne cinématique.

Au moins une joue peut en outre comporter au moins une deuxième surface de butée arquée.

Enfin, le levier d'entrée peut être solidarisé à l'arbre de commande ou encore être articulé à l'arbre de commande.

Par exemple, le levier d'entrée peut être solidaire en rotation de l'arbre de commande pour qu'une rotation du levier d'entrée induise une rotation de l'arbre de commande.

Selon un autre exemple, le levier d'entrée peut être articulé à l'arbre de commande, éventuellement pour qu'une translation du levier d'entrée induise une rotation de l'arbre de commande.

Outre une servocommande, l'invention vise un aéronef qui comporte au moins une servocommande selon l'invention reliée à au moins un circuit hydraulique.

La présente invention a aussi pour objet le procédé de fabrication du dispositif précité.

L'invention et ses avantages apparaîtront avec plus de détails dans le cadre de la description qui suit avec des exemples donnés à titre illustratif en référence aux figures annexées qui représentent :
- la figure 1, une vue d'un aéronef selon l'invention,
- la figure 2, une vue d'une servocommande selon l'invention,
- la figure 3, un schéma présentant une servocommande à simple corps selon un mode de réalisation hydraulique,
- les figures 4 et 6, des coupes présentant un corps d'une servocommande selon un mode de réalisation hydraulique et dans une première position,
- les figures 5 et 7, des coupes présentant un corps d'une servocommande selon un mode de réalisation hydraulique et dans une deuxième position,
- les figures 8 et 9, un schéma présentant une servocommande à double corps, et
- la figure 10, un schéma illustrant une servocommande muni d'un actionneur.

Les éléments présents dans plusieurs figures distinctes sont affectés d'une seule et même référence.

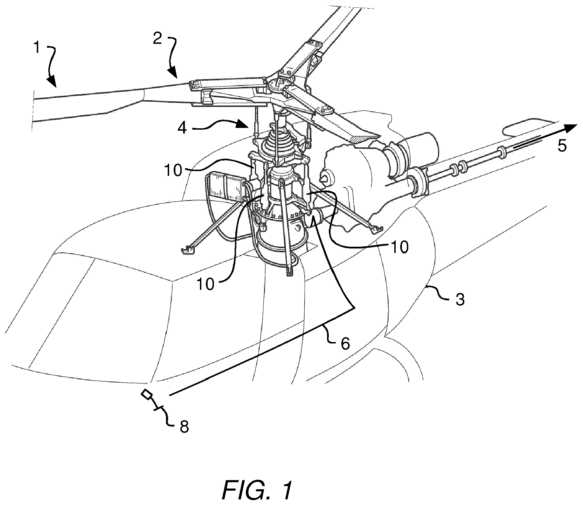

La figure 1 présente un aéronef 1, et plus particulièrement un giravion muni d'une cellule 3 portant un rotor principal 2 et un rotor arrière 5 non visible.

Cet aéronef 1 comprend alors un ensemble de plateaux cycliques 4 pour ajuster le pas des pales du rotor principal 2. Cet ensemble de plateaux cycliques est commandé par trois servocommandes 10 reliées à des moyens de commande 8 par des chaînes cinématiques 6.

De même, la chaîne de commande commandant le pas des pales du rotor arrière 5 peut comprendre une servocommande non représentée sur cette figure 1.

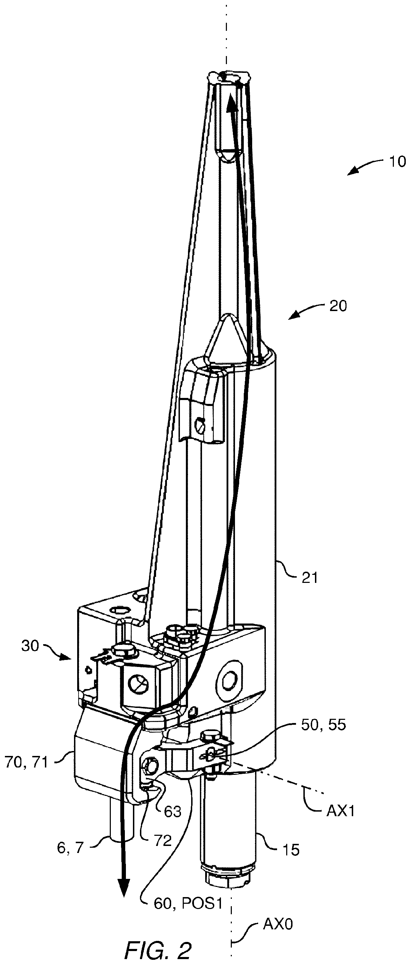

En référence à la figure 2, chaque servocommande 10 selon l'invention comporte un corps 20 et une tige de puissance 15.

La tige de puissance est munie d'un moyen d'ancrage à une structure. Un tel moyen d'ancrage peut prendre la forme d'une articulation fixée à un point d'ancrage d'une structure.

Dès lors, chaque corps 20 est un corps mobile, à savoir un corps qui peut coulisser le long de la tige de puissance selon une direction d'extension AX0 de cette tige de puissance.

Classiquement, le corps 20 présente un carter extérieur 21. Un tel carter extérieur 21 peut comporter une unique enveloppe, ou encore une pluralité d'enveloppes solidarisées par des moyens usuels les unes aux autres.

Ce corps délimite notamment un volume interne dans lequel évolue un piston de la tige de puissance. Ce piston partage alors le volume interne en deux chambres, à savoir en une chambre d'extension et une chambre de rétraction.

Pour alimenter la chambre de rétraction et la chambre d'extension, le corps 20 comporte un distributeur hydraulique 30. Ce distributeur hydraulique 30 accueille un tiroir de distribution. Ce tiroir de distribution est mobile par rapport au carter extérieur pour contrôler la pression régnant dans la chambre de rétraction et la chambre d'extension.

Pour piloter la position du tiroir de distribution par rapport au carter extérieur, le distributeur hydraulique comporte un arbre de commande 50 mobile en rotation autour d'un axe longitudinal AX1. Une direction parallèle à l'axe longitudinal AX1 est sensiblement perpendiculaire à la direction d'extension de la tige de puissance AX0. De même, une direction parallèle à l'axe longitudinal AX1 est sensiblement perpendiculaire à un axe de symétrie du tiroir de distribution.

Cet arbre de commande 50 est en outre mécaniquement relié au tiroir de distribution pour qu'une rotation de l'arbre de commande autour de l'axe longitudinal AX1 induise un déplacement du tiroir de distribution, par exemple une translation du tiroir de distribution.

Par ailleurs, la servocommande comporte un levier d'entrée 60 qui est articulé à une bielle de commande 7 d'une chaîne cinématique 6. Cette chaîne cinématique 6 débouche sur au moins un moyen de commande manoeuvrable par un pilote.

Le levier d'entrée 60 est outre situé en dehors du corps 20 associé.

De plus, le levier d'entrée 60 est mécaniquement relié à l'arbre de commande. Ainsi, un déplacement du levier d'entrée 60 selon un mouvement dit « premier mouvement » induit une rotation de l'arbre de commande 50. Ce premier mouvement peut prendre la forme selon la figure 2 d'une rotation autour de l'axe longitudinal AX1, ou selon une autre variante d'une translation transversale selon une direction transversale. Une direction parallèle à la direction transversale est par exemple sensiblement perpendiculaire à l'axe longitudinal AX1.

L'arbre de commande 50 saille partiellement du corps 20. Dès lors, cet arbre de commande présente une partie non saillante non visible sur la figure 2 qui est agencée dans le corps 20. De plus, l'arbre de commande comporte une partie saillante 55 qui est agencée en dehors du corps 20. La partie non saillante est alors reliée mécaniquement au tiroir de distribution, alors que la partie saillante est reliée mécaniquement au levier d'entrée 60.

Par exemple, le levier d'entrée 60 de la figure 2 est solidarisé à l'arbre de commande 50. Ainsi, un premier mouvement rotatif du levier d'entrée autour de l'axe longitudinal AX1 induit une rotation de l'arbre de commande 50.

Selon un autre exemple, le levier d'entrée est relié à l'arbre de commande par une liaison mécanique usuelle pour qu'une translation transversale du levier d'entrée induise une rotation de l'arbre de commande 50.

En outre, le levier d'entrée comporte une portion dite « portion d'arrêt 63 ». Par exemple, la chaîne cinématique 6 est articulée à cette portion d'arrêt 63.

La portion d'arrêt 63 comporte éventuellement une surface d'arrêt arquée, voire en particulier au moins partiellement circulaire.

Dès lors, la servocommande est munie d'un organe de butée 70 dans lequel évolue au moins partiellement la portion d'arrêt 63. L'organe de butée a pour fonction d'ajuster le débattement sans contrainte du levier d'entrée lorsque le levier d'entrée effectue un dit premier mouvement.

Cet organe de butée 70 est solidarisé au corps 20 par des moyens usuels de type visserie, rivetage, collage, soudure par exemple.

De plus, cet organe de butée 70 présente au moins une surface de butée dite « première surface de butée ». Par exemple, au moins une surface de butée est une surface arquée, voire en particulier au moins partiellement circulaire. La première surface de butée 72 a pour fonction de limiter l'amplitude de déplacement sans contrainte de la portion d'arrêt 63 à une première amplitude 201 dans certaines conditions.

L'organe de butée peut comporter en outre, une surface de butée évolutive et / ou une deuxième surface de butée limitant le premier mouvement sans contrainte du levier d'entrée à une deuxième amplitude différente de la première amplitude.

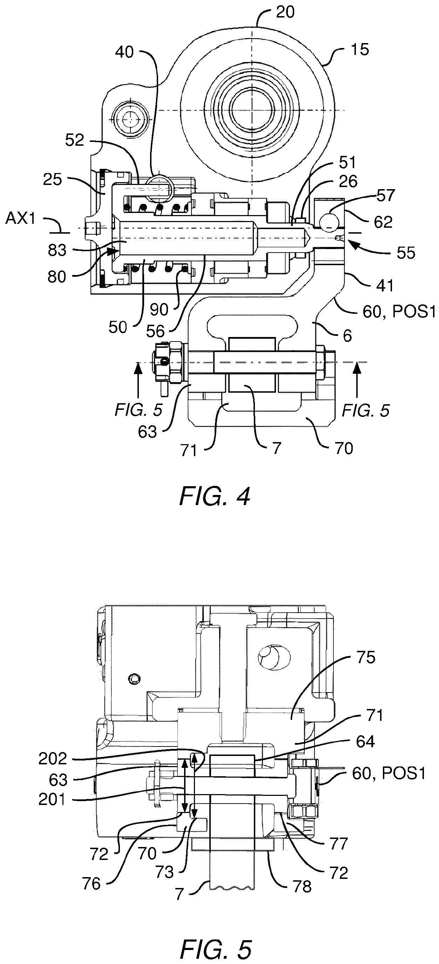

Selon la variante de la figure 5, l'organe de butée 70 peut comporter une chape 75. La chape 75 possède une première joue 76 et une deuxième joue 77.

Un espace 78 sépare les joues 76, 77. Par suite, une bielle de commande 7 de la chaîne cinématique 6 peut traverser cet espace pour être articulée à la portion d'arrêt par une articulation 64.

Par ailleurs, au moins une joue 76, 77 comporte au moins une première surface de butée 72. Au moins une joue 76, 77 peut aussi comporter au moins une deuxième surface de butée 73.

Selon l'exemple de la figure 5, chaque joue présente une première surface de butée 72 et une deuxième surface de butée 73. D'autres variantes peuvent présentés éventuellement une surface de butée évolutive, par exemple entre la première surface de butée et la deuxième surface de butée.

Par ailleurs, la servocommande 10 comporte un moyen de mobilité non visible sur la figure 5. Ce moyen de mobilité a pour fonction de déplacer longitudinalement le levier d'entrée 60 selon un mouvement dit « deuxième mouvement », différent du premier mouvement permettant de mettre en rotation l'arbre de commande.

Ainsi, le moyen de mobilité peut déplacer en translation longitudinale le long de l'axe longitudinal AX1 le levier d'entrée 60 entre une première position POS1 incluse et une deuxième position non visible sur la figure 5 incluse.

Le moyen de mobilité déplace notamment le levier d'entrée en fonction d'au moins une condition prédéterminée. Une telle condition prédéterminée peut comprendre une condition de pression, une condition d'activation d'un organe manoeuvrable par un pilote, une condition d'exécution donnée par un équipement de l'aéronef.

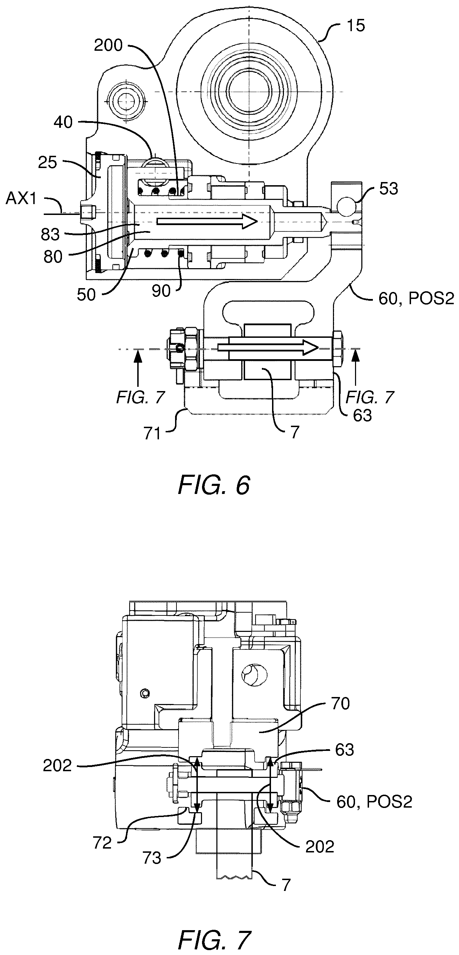

Dès lors, lorsque le levier d'entrée 60 est dans la première position POS1, la première surface de butée 72 limite l'amplitude de déplacement sans contrainte de la portion d'arrêt 63 à une première amplitude 201. Par contre, lorsque le levier d'entrée 60 est dans la deuxième position POS2 visible sur la figure 7, la deuxième surface de butée 72 limite l'amplitude de déplacement sans contrainte de la portion d'arrêt 63 à une deuxième amplitude 202.

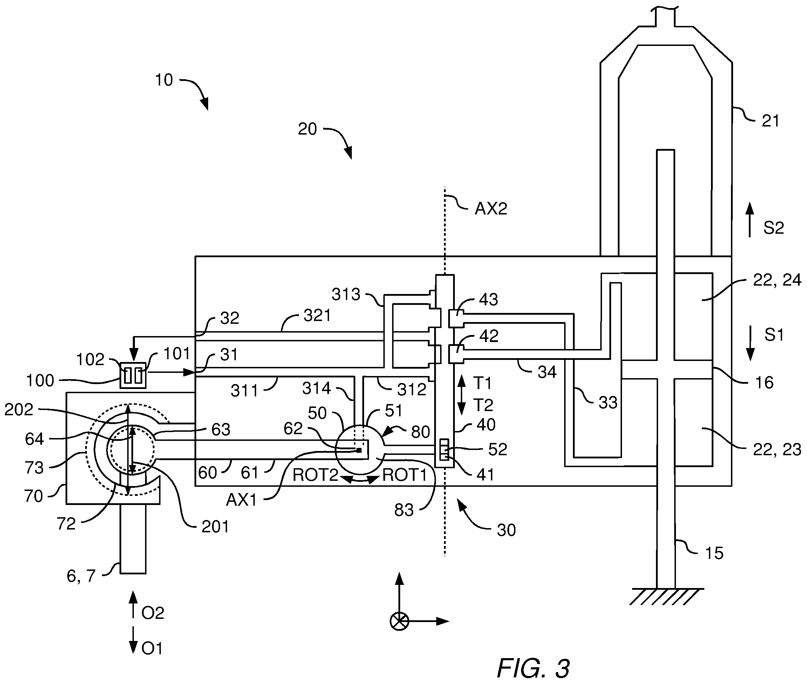

La figure 3 présente une servocommande à simple corps selon un mode de réalisation hydraulique.

Indépendamment de la réalisation, la servocommande est munie d'une tige de puissance 15 comprenant un piston 16 par corps 20. Chaque piston 16 délimite au sein du carter 21 du corps associé une chambre 22 dite « chambre de rétraction 23 » et une chambre 22 dite « chambre d'extension 24 ».

Dès lors, le corps 20 comporte un distributeur hydraulique 30 relié à un circuit hydraulique 100. Ainsi, le distributeur hydraulique est muni d'au moins une entrée hydraulique 31 reliée à un système d'acheminement de fluide 101 et d'au moins une sortie hydraulique 32 reliée à un système d'échappement de fluide 102 du circuit hydraulique 100.

Chaque distributeur hydraulique 30 comprend de plus un canal dit « canal de rétraction 33 » qui débouche sur la chambre de rétraction 23, et un canal dit « canal d'extension 34 » qui débouche sur la chambre d'extension 24. Dès lors, le distributeur hydraulique 30 inclut un tiroir de distribution 40 interposé entre d'une part le canal de rétraction 33 et le canal d'extension 34, et, d'autre part, l'entrée hydraulique 31 et la sortie hydraulique 32.

Le tiroir de distribution comprend par exemple un arbre muni d'une première gorge 42 et d'une deuxième gorge 43.

Par ailleurs, le distributeur hydraulique comporte un arbre de commande 50 relié au tiroir de distribution. Une rotation ROT1, ROT2 de l'arbre de commande induit un déplacement du tiroir de distribution.

Dans une position neutre du levier d'entrée, aucune gorge n'est par exemple en communication avec l'entrée hydraulique 31 et la sortie hydraulique 32. Le piston est dans une position médiane au sein du volume que ce piston partage en deux chambres 22.

Par contre, un ordre O1 d'un pilote peut requérir un déplacement du levier d'entrée dans une position de rétraction. Dès lors, l'arbre de commande réalise une première rotation ROT1 dans le sens senestrorsum selon l'exemple de la figure 3.

Cette première rotation ROT1 induit un déplacement du tiroir de distribution, et plus particulièrement une première translation T1 vers le haut de la figure 3. La deuxième gorge 43 relie l'entrée hydraulique 31 au canal de rétraction 33 via des conduits 311, 313. La première gorge 42 relie la sortie hydraulique 32 au canal d'extension 34 via un conduit 321.

Dès lors, le corps 20 est translaté selon la flèche S1.

Par contre, la bielle de commande 7 demeure immobile. Dès lors, la translation du corps 20 induit un déplacement de l'arbre de commande par rapport au levier d'entrée. Ce déplacement provoque à terme le replacement du levier d'entrée, de l'arbre de commande et du tiroir de distribution dans la position neutre de la figure 1.

De même, un ordre O2 d'un pilote peut requérir un déplacement du levier d'entrée dans une position d'extension. Dès lors, l'arbre de commande réalise une deuxième rotation ROT2 dans le sens dextrorsum selon l'exemple de la figure 3.

Cette deuxième rotation ROT2 induit un déplacement du tiroir de distribution, et plus particulièrement une deuxième translation T2 vers le bas de la figure 3. La première gorge 42 relie l'entrée hydraulique 31 au canal d'extension 34 via des conduits 311, 312. La deuxième gorge 43 relie la sortie hydraulique 32 au canal de rétraction 33 via un conduit 321.

Dès lors, le corps 20 est translaté selon la flèche S2.

Par ailleurs, l'arbre de commande 50 comporte une structure allongée 51 s'étendant longitudinalement le long d'un axe longitudinal AX1. De plus, l'arbre de commande 50 inclut un bras allongé 52 solidaire de la structure allongée 51. Ce bras allongé 52 s'étendant longitudinalement en parallèle à la structure allongée 51. De plus, le bras allongé 52 peut coulisser dans un orifice 41 du tiroir de distribution 40. Dès lors, une rotation de l'arbre de commande induit une translation du tiroir de distribution.

Par ailleurs, l'arbre de commande est mécaniquement relié au levier d'entrée 60. En particulier, la structure allongée 51 est mécaniquement liée au levier d'entrée 60.

Ce levier d'entrée 60 est en outre muni d'une articulation 64 reliée à la bielle de commande 7 de la chaîne cinématique 6. Cette articulation 64 peut être portée par la portion d'arrêt 63 du levier d'entrée 60.

Cette portion d'arrêt 63 est disposée au sein de l'organe de butée 70.

Dès lors, l'organe de butée comporte au moins une première surface de butée 72 limitant le premier mouvement du levier d'entrée à une première amplitude 201 lorsque le levier d'entrée est positionné dans la première position POS1 par le moyen de mobilité.

Selon la réalisation de la figure 3, le moyen de mobilité est un dispositif hydraulique appliqué à une servocommande à simple corps.

Ce dispositif hydraulique comporte une cavité 83.

Le moyen de mobilité 80 déplace alors en translation longitudinale le levier d'entrée 60 d'une première position POS1 à une deuxième position et inversement en fonction d'un seuil d'une pression régnant dans cette cavité 83 dit « seuil maximal ». Si la pression régnant dans la cavité est en dessous du seuil maximal, le levier d'entrée est dans la première position. Par contre, si la pression régnant dans la cavité est au dessus du seuil maximal, le levier d'entrée est mû dans la deuxième position.

Cette cavité peut être ménagée dans le circuit hydraulique 100.

Par contre, cette cavité est selon la réalisation de la figure 3 ménagée dans le corps de la servocommande. La cavité 83 est reliée à l'entrée hydraulique 31 par une liaison fluidique 314 du moyen de mobilité 80.

En référence à la figure 4, cette cavité 83 est délimitée partiellement par l'arbre de commande 50 et un fond 25 du carter du corps. Ce fond 25 peut être amovible.

Dès lors, l'arbre de commande 50 est solidaire en translation longitudinale avec le levier d'entrée 60.

A cet effet, l'arbre de commande 50 comporte une partie non saillante 56 agencée dans le corps 20 et une partie saillante 55 agencée en dehors du corps 20.

La partie non saillante 56 est reliée mécaniquement au tiroir de distribution 40 par le bras allongé 52. Par contre, la partie saillante 55 est reliée mécaniquement au levier d'entrée 60. Plus particulièrement, selon la réalisation de la figure 4, la partie saillante 55 est solidarisée au levier d'entrée 60 par des moyens usuels 57, tel qu'une goupille. Par suite, le levier d'entrée comporte une tige 61 s'étendant de la portion d'arrêt 63 à une extrémité 62 reliée à l'arbre de commande.

Par ailleurs, un joint 26 est agencé entre l'arbre de commande et le carter du corps de la servocommande.

Pour empêcher un déplacement du levier d'entrée en dessous du seuil maximal, le distributeur hydraulique 30 comporte un organe élastique 90. Cet organe élastique 90 peut comprendre un bloc de matière élastique ou encore un ressort selon la représentation de la figure 4.

Cet organe élastique 90 exerce un effort sur l'arbre de commande 50 pour maintenir l'arbre de commande 50 dans la première position POS1 en dessous du seuil maximal de pression.

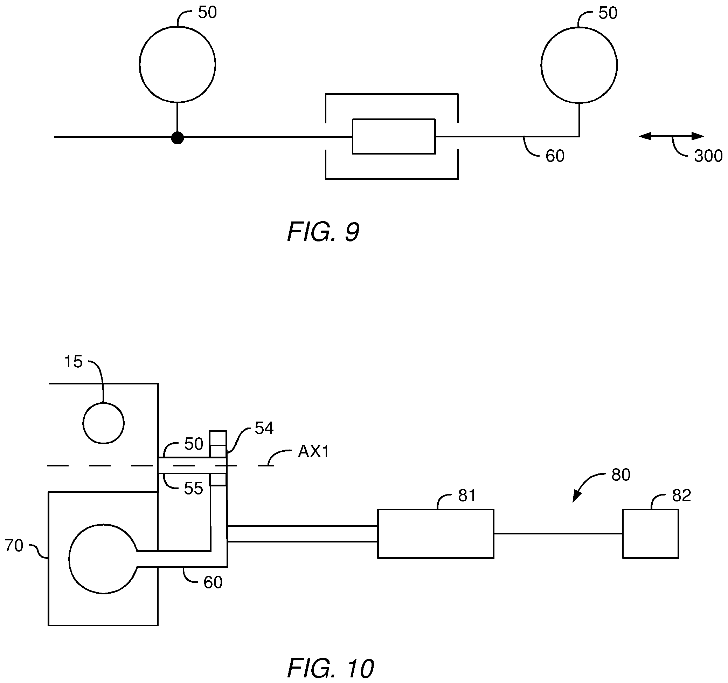

La figure 10 présente une réalisation alternative d'un moyen de mobilité.

Selon cette réalisation, le levier d'entrée 60 peut coulisser le long de l'arbre de commande 50. Par exemple, le levier d'entrée est solidaire en rotation de l'arbre de commande 50 par des cannelures 54.

Dès lors, le moyen de mobilité 80 comporte un actionneur 81 relié au levier d'entrée 60. Cet actionneur 81 peut être un vérin hydraulique, pneumatique ou encore électrique qui est apte à faire coulisser en translation longitudinale le levier d'entrée sur l'arbre de commande.

De plus, le moyen de mobilité possède un dispositif de commande 82 apte à donner un ordre à l'actionneur 81 pour déplacer en translation longitudinale le levier d'entrée en fonction de ladite valeur.

Le dispositif de commande 82 peut comporter un capteur de pression agencé dans un circuit hydraulique par exemple, un bouton manoeuvré par un pilote, un équipement déterminant la position du levier d'entrée à atteindre, un capteur mesurant la valeur d'un paramètre de surveillance de l'aéronef....

Les figures 4 à 7 explicitent le fonctionnement de l'invention sur une servocommande à simple corps. Ce procédé est explicité sur la base du mode de réalisation hydraulique de la figure 3, mais peut être mis en oeuvre par la réalisation de la figure 10.

En référence aux figures 4 et 5, lorsque le circuit hydraulique n'alimente pas la servocommande, le levier d'entrée 60 est dans la première position POS1 au regard de l'organe de butée 70. La portion d'arrêt 63 du levier d'entrée est alors en vis-à-vis de la première surface de butée 72 de l'organe de butée.

Le levier d'entrée 60 peut effectuer un premier mouvement sans contrainte d'une première amplitude au sein de l'organe de butée 70 pour déplacer l'arbre de commande 55.

La servocommande ne fournit alors aucune assistance hydraulique.

Par contre, lorsque la portion d'arrêt entre en contact avec l'organe de butée, cette portion d'arrêt peut déplacer sans contrainte l'organe de butée et par suite le corps de la servocommande.

Le corps 20 de la servocommande peut alors se comporter comme une bielle.

Lorsque le circuit hydraulique alimente la servocommande, le levier d'entrée 70 reste dans la première position tant qu'une première condition n'est pas remplie.

Par exemple, le levier d'entrée 60 est maintenu dans la première position POS1 tant que la pression régnant dans la servocommande est inférieure à un seuil maximal de pression. Par exemple, ce seuil maximal est de l'ordre de 40 bars.

Selon la réalisation de la figure 4, l'organe élastique 90 est dimensionné pour maintenir l'arbre de commande et le levier d'entrée dans la première position POS1 tant que la première condition n'est pas remplie.

Néanmoins, la servocommande peut fournir une assistance hydraulique si une deuxième condition est remplie.

Ainsi, la servocommande peut par exemple fournir une assistance hydraulique dès que la pression régnant dans la servocommande atteint un seuil minimal de pression. Ce seuil minimal de pression est inférieur au seuil maximal, en étant de l'ordre de 10 bars par exemple.

Dès que la deuxième condition est remplie et en référence à la figure 5, le fonctionnement intrinsèque de la servocommande induit le centrage de la portion d'arrêt 63 au sein de la première surface de butée 72. Le levier d'entrée est dans une position neutre. Dans cette position neutre, le tiroir de distribution 40 isole hydrauliquement les chambres 22 de l'entrée hydraulique 31 et de la sortie hydraulique 32.

En effet, si le levier d'entrée n'est pas centré lorsque le seuil minimal est atteint, ce levier d'entrée décale de fait le tiroir de distribution par rapport à sa position neutre. Dès lors, le fluide hydraulique est acheminé vers une chambre de la servocommande. En raison de la pression du fluide, ce fluide induit le déplacement du corps de la servocommande vers sa position neutre.

Par conséquent, le levier d'entrée se trouve alors dans une position centrée au sein de l'organe de butée.

Ce levier d'entrée peut être déplacé sans contrainte par des commandes de vol selon un premier mouvement sur une première amplitude 201 pour requérir l'assistance hydraulique de la servocommande.

Cette première amplitude est réduite dans le cadre d'une servocommande à simple corps. Par exemple, la première amplitude est de l'ordre de plus ou moins un millimètre par rapport à la position neutre.

Ce jeu réduit permet à la servocommande d'assister le pilote, en conférant cependant à la servocommande une vitesse de déplacement relativement réduite.

En référence à la figure 6, lorsque la première condition est remplie, le levier d'entrée 60 est déplacée par le moyen de mobilité 80 vers une deuxième position POS2.

Selon la réalisation de la figure 6, la pression régnant dans la cavité 83 génère un effort sur l'arbre de commande qui est supérieur à l'effort de rappel exercé par le ressort 90. L'arbre de commande 50 et le levier d'entrée effectuent conjointement une translation longitudinale le long de l'axe longitudinal AX1. Cette translation longitudinale peut être interrompue par une butée 200 du corps de la servocommande, un épaulement de l'arbre de commande venant au contact de cette butée 200. Le levier d'entrée et l'arbre de commande sont alors dans une deuxième position POS2.

On note que l'organe de butée n'entrave pas la transition de la première position POS1 vers la deuxième position POS 2, le levier d'entrée étant préalablement centré dans l'organe de butée.

En référence à la figure 7, la portion d'arrêt 63 du levier d'entrée 60 n'est alors plus en vis-à-vis de la première surface de butée.

Par contre, la portion d'arrêt peut être en vis-à-vis d'une deuxième surface de butée 73.

Par suite, ce levier d'entrée peut alors être déplacé sans contrainte par des commandes de vol selon un premier mouvement sur une deuxième amplitude 202 pour requérir l'assistance hydraulique de la servocommande.

Cette deuxième amplitude est plus importante que la première amplitude dans le cadre d'une servocommande à simple corps. Par exemple, la deuxième amplitude est de l'ordre de plus ou moins trois millimètres par rapport à la position neutre.

Ce jeu étendu permet à la servocommande d'assister le pilote, en conférant cependant à la servocommande une vitesse de déplacement relativement rapide.

En cas de panne hydraulique, le moyen de mobilité positionne le levier d'entrée dans la première position POS1. En raison de la panne hydraulique, le déplacement sans contrainte du levier d'entrée dans les limites de la première amplitude n'a pas d'influence. Par contre, dès que le levier d'entrée bute contre l'organe de butée, ce levier d'entrée déplace avec contrainte le corps de la servocommande. Ce corps se comporte par suite comme une bielle.

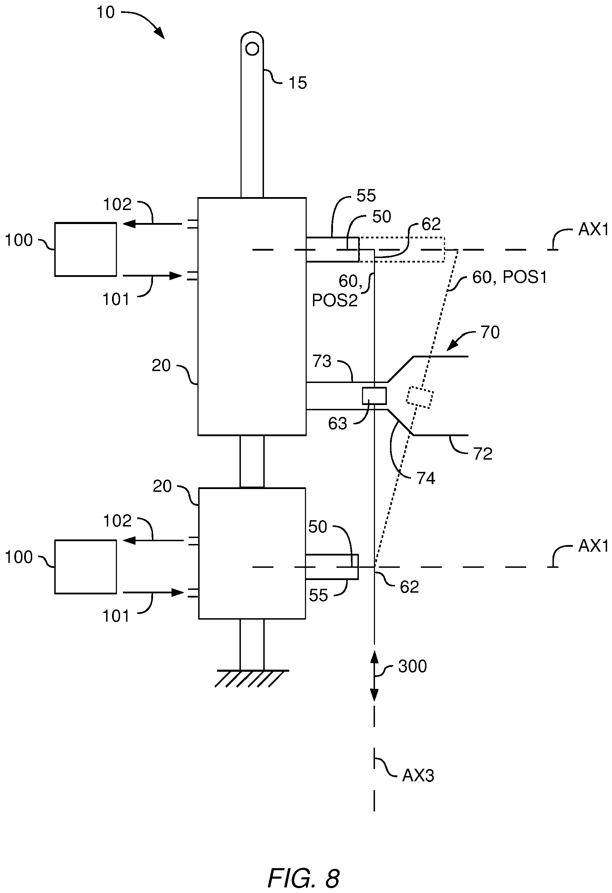

Les figures 8 et 9 illustrent une servocommande à au moins deux corps selon l'invention.

Chaque corps comporte un distributeur hydraulique muni d'un tiroir de distribution coopérant avec un arbre de commande 50.

De plus, les arbres de commande 50 des corps sont reliés mécaniquement à un levier d'entrée 60.

Selon la figure 9, le levier d'entrée 6 est articulé à chaque arbre de commande. Une translation transversale du levier d'entrée selon la double flèche 300 induit ainsi une rotation de chaque arbre de commande.

Par ailleurs et en référence à la figure 8, le levier d'entrée 60 comporte une portion d'arrêt 63 agencée dans un organe de butée 70. Cet organe de butée est solidaire d'un corps de la servocommande.

Lorsque la première condition est remplie pour chaque corps, chaque levier d'entrée se trouve dans la deuxième position POS2 représentée en traits pleins.

Le débattement du levier d'entrée est limité par l'organe de butée à une deuxième amplitude réduite pour éviter que la servocommande soit trop réactive.

Par contre, si le circuit hydraulique alimentant un corps est défectueux, le levier de commande retourne vers sa première position POS1. Selon l'exemple représenté, l'arbre de commande du corps supérieur de la servocommande est déplacé longitudinalement.

Dès lors, le débattement sans contrainte du levier d'entrée est limité par l'organe de butée à une première amplitude importante pour pouvoir augmenter les performances du corps restant en fonctionnement.

De même, a l'arrêt ou lorsque seule la deuxième condition est remplie pour chaque corps, le levier d'entrée est dans une premier position POS1 dans laquelle le débattement du levier d'entrée est limité par l'organe de butée à une première amplitude.

Dans le cadre d'une servocommande ayant plusieurs corps, le levier d'entrée est dans la première position POS1 lorsque la première condition n'est pas remplie pour au moins un corps.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Servocommande (10) munie d'au moins un corps (20) mobile et d'une tige de puissance (15) immobile, ladite tige de puissance (15) comprenant un piston (16) par corps (20), chaque piston (16) délimitant une chambre (22) dite « chambre de rétraction (23) » et une chambre (22) dite « chambre d'extension (24) » dans un carter (21) dudit corps (20), chaque corps (20) comportant un distributeur hydraulique (30) muni d'au moins une entrée hydraulique (31) apte à être reliée à un système d'acheminement de fluide (101) et d'au moins une sortie hydraulique (32) apte à être reliée à un système d'échappement de fluide (102), chaque distributeur hydraulique (30) d'un corps (20) comprenant au moins un tiroir de distribution (40) hydraulique mobile au sein dudit distributeur hydraulique (30) pour mettre sur requête en communication fluidique chaque chambre (22) de ce corps avec ladite entrée hydraulique (31) ou ladite sortie hydraulique (32), ledit distributeur hydraulique (30) comprenant un arbre de commande (50) mobile en rotation autour d'un axe longitudinal (AX1), ladite servocommande (10) comportant un levier d'entrée (60) situé en dehors de chaque corps (20), ledit levier d'entrée étant apte à être relié à une chaîne cinématique (6) générant un ordre de déplacement de la servocommande (10),
ledit arbre de commande (50) étant relié au dit tiroir de distribution (40) pour qu'une rotation (ROT1, ROT2) de l'arbre de commande (50) induise un déplacement du tiroir de distribution (40), le levier d'entrée (60) étant relié à l'arbre de commande (50) et étant mobile selon un premier mouvement pour mettre en rotation cet arbre de commande (50), ladite servocommande (10) comprenant un organe de butée (70) fixe solidaire d'au moins un desdits corps (20), ledit organe de butée (70) étant muni d'au moins une première surface de butée (72), ledit levier d'entrée (60) comprenant une portion d'arrêt (63) coopérant avec ledit organe de butée (70), **caractérisée en ce que** ladite servocommande (10) comporte un moyen de mobilité (80) pour déplacer selon un deuxième mouvement en translation longitudinale le levier d'entrée (60) d'une première position (POS1) à une deuxième position (POS2) et inversement en fonction d'une condition prédéterminée, la première surface de butée (72) limitant un débattement sans contrainte de ladite portion d'arrêt (63) lors du premier mouvement à une première amplitude (201) uniquement lorsque ledit levier d'entrée (60) est dans la première position (POS1).

2. Servocommande selon la revendication 1,
**caractérisée en ce que** ledit organe de butée (70) comporte une deuxième surface de butée (73) distincte de la première surface de butée (72), la deuxième surface de butée (73) limitant ladite amplitude de déplacement de ladite portion d'arrêt (63) lors du premier mouvement à une deuxième amplitude (202) lorsque ledit levier d'entrée (60) est dans la deuxième position (POS2), ladite deuxième amplitude (202) étant différente de la première amplitude (201).

3. Servocommande selon l'une quelconque des revendications 1 à 2,
**caractérisée en ce que** ledit organe de butée (70) comporte une surface de butée (74) qui évolue longitudinalement à partir de la première surface de butée (72).

4. Servocommande selon l'une quelconque des revendications 1 à 3,
**caractérisée en ce que** la portion d'arrêt (63) est centrée au sein de la première surface de butée (72) lorsque ladite servocommande (10) est alimentée par une fluide hydraulique a une pression supérieure à un seuil de pression dit « seuil minimal », ledit tiroir de distribution (40) isolant hydrauliquement lesdites chambres (22) de l'entrée hydraulique (31) et de la sortie hydraulique (32).

5. Servocommande selon l'une quelconque des revendications 1 à 4,
**caractérisée en ce que** ledit moyen de mobilité (80) comporte un actionneur (81) relié au levier d'entrée (60) et un dispositif de commande (82) apte à donner un ordre à l'actionneur (81) pour déplacer en translation longitudinale le levier d'entrée.

6. Servocommande selon l'une quelconque des revendications 1 à 4,
**caractérisée en ce que** ledit moyen de mobilité (80) comporte une cavité (83), ledit moyen de mobilité (80) déplaçant en translation longitudinale le levier d'entrée (60) d'une première position (POS1) à une deuxième position et inversement en fonction d'un seuil d'une pression régnant dans ladite cavité (83) dit « seuil maximal ».

7. Servocommande selon la revendication 6,
**caractérisée en ce que** ladite servocommande (10) comportant un circuit hydraulique (100) alimentant une entrée hydraulique (31) d'un corps (20), ladite cavité est ménagée dans ledit circuit hydraulique (100).

8. Servocommande selon la revendication 6,
**caractérisée en ce que** ladite cavité (83) est ménagée dans l'arbre de commande (50) au sein dudit corps (20), ledit arbre de commande (50) étant solidaire en translation longitudinale avec le levier d'entrée (60), ledit moyen de mobilité (80) comportant une liaison fluidique reliant ladite cavité (83) à ladite entrée hydraulique (31).

9. Servocommande selon la revendication 8,
**caractérisée en ce que** ledit distributeur hydraulique (30) comporte un organe élastique (90) qui maintient ledit arbre de commande (50) dans la première position (POS1) en dessous dudit seuil maximal de pression.

10. Servocommande selon l'une quelconque des revendications 1 à 9,
**caractérisée en ce que** ledit arbre de commande (50) comporte une structure allongée (51) s'étendant longitudinalement et un bras allongé (52) solidaire de ladite structure allongée (51), ledit bras allongé (52) s'étendant longitudinalement en parallèle à ladite structure allongée (51), ledit bras allongé (52) coulissant dans un orifice (41) dudit tiroir de distribution (40).

11. Servocommande selon l'une quelconque des revendications 1 à 10,
**caractérisée en ce que** ledit arbre de commande (50) saille partiellement dudit corps (20) en comportant une partie non saillante (56) agencée dans ledit corps (20) et une partie saillante (55) agencée en dehors dudit corps (20), ladite partie non saillante (56) étant reliée mécaniquement au tiroir de distribution (40), ladite partie saillante (55) étant reliée mécaniquement au levier d'entrée (60).

12. Servocommande selon l'une quelconque des revendications 1 à 11,
**caractérisée en ce que** ledit organe de butée (70) comporte une chape (75) munie d'une première joue (76) et d'une deuxième joue (77), au moins une joue (76, 77) comportant au moins une première surface de butée (72) arquée, un espace (78) séparant lesdites joues (76, 77) étant apte à être traversé par une bielle de commande (7) de ladite chaîne cinématique (6).

13. Servocommande selon la revendication 12,
**caractérisée en ce qu'**au moins une joue (76, 77) comporte au moins une deuxième surface de butée (73) arquée.

14. Servocommande selon l'une quelconque des revendications 1 à 13,
**caractérisée en ce que** ledit levier d'entrée (60) est solidarisé à l'arbre de commande (50).

15. Servocommande selon l'une quelconque des revendications 1 à 14,
**caractérisée en ce que** ledit levier d'entrée (60) est articulé à l'arbre de commande (50).

16. Servocommande selon l'une quelconque des revendications 1 à 15,
**caractérisée en ce que** ladite portion d'arrêt (63) comporte une articulation (64) apte à être reliée à ladite chaîne cinématique (6).

17. Aéronef (1),
**caractérisé en ce que** ledit aéronef (1) comporte au moins une servocommande selon l'une quelconques des revendications 1 à 16.

## Patentansprüche

1. Servosteuerung (10) mit mindestens einem beweglichen Körper (20) und einer unbeweglichen Kolbenstange (15), wobei die Kolbenstange (15) einen Kolben (16) pro Körper (20) aufweist, wobei jeder Kolben (16) eine "Rückziehkammer (23)" genannte Kammer (22) und eine "Ausdehnungskammer (24)" genannte Kammer (22) in einem Gehäuse (21) des Körpers (20) begrenzt, wobei jeder Körper (20) einen Hydraulikverteiler (30) aufweist mit mindestens einem Hydraulikeinlass (31), der mit einem Fluidzufuhrsystem (101) verbunden werden kann, und mit mindestens einem Hydraulikauslass (32), der mit einem Fluidauslasssystem (102) verbunden werden kann, wobei jeder Hydraulikverteiler (30) eines Körpers (20) mindestens einen beweglichen Hydrauliksteuerschieber (40) in dem Hydraulikverteiler (30) aufweist, um auf Anforderung jede Kammer (22) dieses Körpers mit dem Hydraulikeinlass (31) oder dem Hydraulikauslass (32) fluidisch zu verbinden, wobei der Hydraulikverteiler (30) eine um eine Längsachse (AX1) drehbewegliche Steuerwelle (50) aufweist, wobei die Servosteuerung (10) einen Eingangshebel (60) aufweist, der außerhalb eines jeden Körpers (20) angeordnet ist, wobei der Eingangshebel mit einem Antriebsstrang (6) verbunden werden kann, der einen Verschiebebefehl der Servosteuerung (10) erzeugt, wobei die Steuerwelle (50) mit dem Steuerschieber (40) verbunden ist, damit eine Drehung (ROT1, ROT2) der Steuerwelle (50) eine Verschiebung des Steuerschiebers (40) bewirkt, wobei der Eingangshebel (60) mit der Steuerwelle (50) verbunden ist und gemäß einer ersten Bewegung beweglich ist, um diese Steuerwelle (50) zu drehen, wobei die Servosteuerung (10) ein Anschlagselement (70) aufweist, das mit mindestens einem der Körper (20) fest verbunden ist, wobei das Anschlagselement (70) mit mindestens einer Anschlagsfläche (72) versehen ist, wobei der Eingangshebel (60) einen Stopperabschnitt (63) aufweist, der mit dem Anschlagselement (70) zusammenwirkt,
**dadurch gekennzeichnet, dass** die Servosteuerung (10) ein Beweglichkeitsmittel (80) aufweist, um den Eingangshebel gemäß einer zweiten Längstranslationsbewegung aus einer ersten Stellung (POS1) in eine zweite Stellung (POS2) und umgekehrt zu bewegen in Abhängigkeit von einer vorbestimmten Bedingung, wobei die erste Anschlagsfläche (72) ein Ausschlagen des Stopperabschnitts (63) spannungsfrei während der ersten Bewegung auf eine erste Amplitude (201) ausschließlich dann begrenzt, wenn der Eingangshebel (60) sich in der ersten Stellung (POS1) befindet.

2. Servosteuerung nach Anspruch 1,
**dadurch gekennzeichnet, dass** das Anschlagselement (70) eine zweite Anschlagsfläche (73), die von der ersten Anschlagsfläche (72) verschieden ist, aufweist, wobei die zweite Anschlagsfläche (73) die Amplitude der Verschiebung des Stopperabschnitts (63) während der ersten Bewegung auf eine zweite Amplitude (202) begrenzt, wenn der Eingangshebel (60) sich in der zweiten Stellung (POS2) befindet, wobei die zweite Amplitude (202) von der ersten Amplitude (201) verschieden ist.

3. Servosteuerung nach einem der Ansprüche 1 bis 2,
**dadurch gekennzeichnet, dass** das Anschlagselement (70) eine Anschlagsfläche (74) aufweist, die sich in Längsrichtung ausgehend von der ersten Anschlagsfläche (72) aus erstreckt.

4. Servosteuerung nach einem der Ansprüche 1 bis 3,
**dadurch gekennzeichnet, dass** der Stopperabschnitt (63) in der ersten Anschlagsfläche (72) zentriert ist, wenn die Servosteuerung (10) mit einem Hydraulikfluid mit einem Druck gespeist wird, der größer als ein "minimaler Schwellenwert" genannter Druckschwellenwert ist, wobei der Steuerschieber (40) hydraulisch die Kammern (22) des Hydraulikeinlasses (31) und des Hydraulikauslasses (32) isoliert.

5. Servosteuerung nach einem der Ansprüche 1 bis 4,
**dadurch gekennzeichnet, dass** die Beweglichkeitsmittel (80) ein Stellglied (81) aufweisen, das mit dem Eingangshebel (60) verbunden ist, und eine Steuervorrichtung (82), die dem Stellglied (81) einen Befehl zur längs-translatorischen Verschiebung des Eingangshebels geben kann.

6. Servosteuerung nach einem der Ansprüche 1 bis 4,
**dadurch gekennzeichnet, dass** das Beweglichkeitsmittel (80) einen Hohlraum (83) aufweist, wobei das Beweglichkeitsmittel (80) den Eingangshebel (60) in einer translatorischen Längsbewegung aus einer ersten Stellung (POS1) in eine zweite Stellung und umgekehrt in Abhängigkeit von einem Schwellenwert eines Drucks, der in dem Hohlraum (83) herrscht, der "maximaler Schwellenwert" genannt wird, verschiebt.

7. Servosteuerung nach Anspruch 6,
**dadurch gekennzeichnet, dass** die Servosteuerung (10) einen Hydraulikkreis (100) aufweist, der einen Hydraulikeinlass (31) eines Körpers (20) speist, wobei der Hohlraum in dem Hydraulikkreis (100) angeordnet ist.

8. Servosteuerung nach Anspruch 6,
**dadurch gekennzeichnet, dass** der Hohlraum (83) in der Steuerwelle (50) innerhalb des Körpers (20) angeordnet ist, wobei die Steuerwelle (50) in Längstranslationsrichtung fest mit dem Eingangshebel (60) verbunden ist, wobei die Beweglichkeitsmittel (80) eine Fluidverbindung aufweisen, die den Hohlraum (83) mit dem Hydraulikeingang (31) verbindet.

9. Servosteuerung nach Anspruch 8,
**dadurch gekennzeichnet, dass** der Hydraulikverteiler (30) ein elastisches Element (90) aufweist, welches die Steuerwelle (50) in der ersten Stellung (POS1) unter dem maximalen Druckschwellenwert hält.

10. Servosteuerung nach einem der Ansprüche 1 bis 9,
**dadurch gekennzeichnet, dass** die Steuerwelle (50) einen länglichen Aufbau (51) hat, der sich in Längsrichtung erstreckt, sowie einen langgestreckten Arm (52), der mit dem länglichen Aufbau (51) fest verbunden ist, wobei der langgestreckte Arm (52) sich in Längsrichtung parallel zu dem länglichen Aufbau (51) erstreckt, wobei der langgestreckte Arm (52) in einer Öffnung (41) des Steuerschiebers (40) gleitet.

11. Servosteuerung nach einem der Ansprüche 1 bis 10,
**dadurch gekennzeichnet, dass** die Steuerwelle (50) teilweise aus dem Körper (20) übersteht und einen nicht überstehenden Teil (56) aufweist, der in dem Körper (20) angeordnet ist, und einen überstehenden Teil (55), der außerhalb des Körpers (20) angeordnet ist, wobei der nicht überstehenden Teil (56) mechanisch mit dem Steuerschieber (40) verbunden ist, wobei der überstehende Teil (55) mechanisch mit dem Eingangshebel (60) verbunden ist.

12. Servosteuerung nach einem der Ansprüche 1 bis 11,
**dadurch gekennzeichnet, dass** das Anschlagselement (70) einen Gabelkopf (75) aufweist mit einer ersten Backe (76) und einer zweiten Backe (77), wobei mindestens eine Backe (76, 77) mindestens eine gekrümmte Anschlagsfläche (72) aufweist, wobei ein Raum (78), der die Backen (76, 77) voneinander trennt, von einer Antriebsstange (7) des Antriebsstrangs (6) durchquert werden kann.

13. Servosteuerung nach Anspruch 12,
**dadurch gekennzeichnet, dass** mindestens eine Backe (76, 77) mindestens ein zweite gekrümmte Anschlagsfläche (73) aufweist.

14. Servosteuerung nach einem der Ansprüche 1 bis 13,
**dadurch gekennzeichnet, dass** der Eingangshebel (60) mit der Steuerwelle (50) fest verbunden ist.

15. Servosteuerung nach einem der Ansprüche 1 bis 14,
**dadurch gekennzeichnet, dass** der Eingangshebel (60) an der Steuerwelle (50) angelenkt ist.

16. Servosteuerung nach einem der Ansprüche 1 bis 15,
**dadurch gekennzeichnet, dass** der Stopperabschnitt (63) ein Gelenk (64) aufweist, das mit dem Antriebsstrang (6) verbunden werden kann.

17. Luftfahrzeug (1),
**dadurch gekennzeichnet, dass** das Luftfahrzeug (1) mindestens eine Servosteuerung nach einem der Ansprüche 1 bis 16 aufweist.

## Claims

1. Servo-control (10) provided with at least one movable body (20) and a stationary power rod (15), said power rod (15) comprising one piston (16) per body (20), each piston (16) defining a chamber (22) referred to as a "retraction chamber (23)" and a chamber (22) referred to as an "extension chamber (24)" in a casing (21) of said body (20), each body (20) comprising a hydraulic distributor (30) provided with at least one hydraulic inlet (31) suitable for being connected to a fluid delivery system (101) and at least one hydraulic outlet (32) suitable for being connected to a fluid discharge system (102), each hydraulic distributor (30) of a body (20) comprising at least one hydraulic distribution slide (40) movable within said hydraulic distributor (30) in order to on request put each chamber (22) of this body into fluid flow communication with said hydraulic inlet (31) or said hydraulic outlet (32), said hydraulic distributor (30) comprising a control shaft (50) movable in rotation about a longitudinal axis (AX1), said servo-control (10) comprising an input lever (60) situated outside each body (20), said input lever being suitable for being connected to a kinematic chain (6) generating an order for displacement of the servo-control (10),
said control shaft (50) being connected to said distribution slide (40) so that a rotation (ROT1, ROT2) of the control shaft (50) induces a displacement of the distribution slide (40), the input lever (60) being connected to the control shaft (50) and being movable according to a first movement for setting in rotation this control shaft (50), said servo-control (10) comprising a fixed abutment member (70) secured to at least one of said bodies (20), said abutment member (70) being provided with at least one first abutment surface (72), said input lever (60) comprising a stop portion (63) cooperating with said abutment member (70), **characterised in that** said servo-control (10) comprises a movement means (80) for displacing the input lever (60) according to a second movement in longitudinal translation from a first position (POS1) to a second position (POS2) and vice versa as a function of a predetermined condition, the first abutment surface (72) limiting constraint-free travel of said stop portion (63) during the first movement to a first amplitude (201) solely when said input lever (60) is in the first position (POS1).

2. Servo-control according to claim 1,
**characterised in that** said abutment member (70) comprises a second abutment surface (73) distinct from the first abutment surface (72), the second abutment surface (73) limiting said displacement amplitude of said stop portion (63) during the first movement to a second amplitude (202) when said input lever (60) is in the second position (POS2), said second amplitude (202) being different from the first amplitude (201).

3. Servo-control according to any one of claims 1 to 2,
**characterised in that** said abutment member (70) comprises an abutment surface (74) which varies longitudinally from the first abutment surface (72).

4. Servo-control according to any one of claims 1 to 3,
**characterised in that** the stop portion (63) is centred within the first abutment surface (72) when said servo-control (10) is supplied with a hydraulic fluid at a pressure greater than a pressure threshold referred to as a "minimum threshold", said distribution slide (40) hydraulically isolating said chambers (22) from the hydraulic inlet (31) and the hydraulic outlet (32).

5. Servo-control according to any one of claims 1 to 4,
**characterised in that** said movement means (80) comprises an actuator (81) connected to the input lever (60) and a control device (82) suitable for giving an order to the actuator (81) to displace the input lever in longitudinal translation.

6. Servo-control according to any one of claims 1 to 4,
**characterised in that** said movement means (80) comprises a cavity (83), said movement means (80) displacing the input lever (60) in longitudinal translation from a first position (POS1) to a second position, and vice versa, as a function of a threshold of a pressure prevailing in said cavity (83) referred to as a "maximum threshold".

7. Servo-control according to claim 6,
**characterised in that** the servo-control (10) comprising a hydraulic circuit (100) supplying a hydraulic inlet (31) of a body (20), said cavity is arranged in said hydraulic circuit (100).

8. Servo-control according to claim 6,
**characterised in that** said cavity (83) is arranged in the control shaft (50) within said body (20), said control shaft (50) being integral in longitudinal translation with the input lever (60), said movement means (80) comprising a fluid-flow connection connecting said cavity (83) to said hydraulic inlet (31).

9. Servo-control according to claim 8,
**characterised in that** said hydraulic distributor (30) comprises an elastic member (90) which keeps said control shaft (50) in the first position (POS1) below said maximum pressure threshold.

10. Servo-control according to any one of claims 1 to 9,
**characterised in that** said control shaft (50) comprises a longitudinally extending elongate structure (51) and an elongate arm (52) integral with said elongate structure (51), said elongate arm (52) extending longitudinally in parallel with said elongate structure (51), said elongate arm (52) sliding in an orifice (41) of said distribution slide (40).

11. Servo-control according to any one of claims 1 to 10,
**characterised in that** said control shaft (50) projects in part from said body (20), comprising a non-projecting portion (56) arranged in said body (20) and a projecting portion (55) arranged outside said body (20), said non-projecting portion (56) being mechanically connected to the distribution slide (40), said projecting portion (55) being mechanically connected to the input lever (60).

12. Servo-control according to any one of claims 1 to 11,
**characterised in that** said abutment member (70) comprises a clevis (75) provided with a first cheek (76) and a second cheek (77), at least one cheek (76, 77) comprising at least one first arcuate abutment surface (72), a space (78) separating said cheeks (76, 77) being suitable for being traversed by a control link (7) of said kinematic chain (6).

13. Servo-control according to claim 12,
**characterised in that** at least one cheek (76, 77) comprises at least one second arcuate abutment surface (73).

14. Servo-control according to any one of claims 1 to 13,
**characterised in that** said input lever (60) is secured to the control shaft (50).

15. Servo-control according to any one of claims 1 to 14,
**characterised in that** said input lever (60) is articulated to the control shaft (50).

16. Servo-control according to any one of claims 1 to 15,
**characterised in that** said stop portion (63) comprises an articulation (64) suitable for being connected to said kinematic chain (6).

17. Aircraft (1),
**characterised in that** said aircraft (1) comprises at least one servo-control according to any one of claims 1 to 16.
